# EUROPEAN PATENT SPECIFICATION

(11) **EP 1 216 545 B1**
(45) Date of publication and mention of the grant of the patent: **03.12.2008**
(21) Application number: 00967091.0
(22) Date of filing: 29.09.2000
(51) Int. Cl.: H04L 12/28, H04Q 7/32

(54) **MULTIPLE WIRELESS COMMUNICATION PROTOCOL METHODS AND APPARATUSES INCLUDING PROACTIVE REDUCTION OF INTERFERENCE**
VERFAHREN UND VORRICHTUNGEN FÜR MEHRFACHE DRAHTLOSKOMMUNIKATIONSPROTOKOLLE MIT PROAKTIVER INTERFERENZVERRINGERUNG
PROCEDE ET APPAREIL RELATIFS A UN PROTOCOLE MULTIPLE DE TELECOMMUNICATIONS SANS FIL INCLUANT UNE REDUCTION PROACTIVE DES INTERFERENCES

(30) Priority: 29.09.1999 US 408725; 08.11.1999 US 436458; 12.11.1999 US 439946; 27.04.2000 US 560672
(43) Date of publication of application: 26.06.2002
(73) Proprietor: Mobilian Corporation, Hillsboro, OR 97124 (US); Nevo, Ron, Hillsboro, OR 97124 (US); Zehavi, Ephraim, 34987 Haifa (IL); Zhao, Xudong, Portland, OR 97229 (US); Ginosar, Ran, 36001 Nofit (IL)
(72) Inventor: NEVO, Ron, Beaverton, OR 97006 (US); ZEHAVI, Ephraim, 34987 Haifa (IL); ZHAO, Xudong, Portland, OR 97229 (US); GINOSAR, Ran, 36001 Nofit (IL)
(74) Representative: Calderbank, Thomas Roger
(86) International application number: PCT/US2000/026807
(87) International publication number: WO 2001/024457

(56) References cited:
- WO-A-99/29126
- HAARTSEN J: "BLUETOOTH - THE UNIVERSAL RADIO INTERFACE FOR AD HOC, WIRELESS CONNECTIVITY" ERICSSON REVIEW,SE,ERICSSON. STOCKHOLM, no. 3, 1998, pages 110-117, XP000783249 ISSN: 0014-0171

## Description

### Related Application

This application *is a continuation-in-part application of* U.S. patent application number 09/439,946, filed on November 12, 2000*, entitled Multiple Wireless Communication Protocol Methods and Apparatuses, which itself* is a continuation-in-part application of (a) U.S. patent application number 09/408,725, filed on September 29, 1999, entitled "A Wireless Apparatus Having Multiple Coordinated Transceivers For Multiple Wireless Communication Protocols", and (b) U.S. patent application number 09/436,458, filed November 8, 1999, entitled "A Wireless Apparatus Having A Transceiver Equipped To Support Multiple Wireless Communication Protocols".

### BACKGROUND OF THE INVENTION

### 1. Field of the Invention

The present invention relates to the field of wireless communication. More specifically, the present invention relates to the problem of concurrent wireless communication with multiple communication partners of different wireless communication protocols.

### 2. Background Information

Advances in microprocessor and communication technology have led to the increase in popularity of wireless communication. Once confined to the privileged, wireless voice communication have become affordable and available to the masses. Today, various efforts are under way to apply wireless communication to replace attachment cables used for attaching peripheral devices, such as printers, scanners and the like, as well as networking cables used for connecting clients, servers and the like. A leading candidate to accomplish the former is commonly known to those skilled in the art as the Bluetooth technology or Bluetooth protocol. *Examples of technology to accomplish the later include the different variants of the IEEE 802.11 Standard published by the Institute of Electrical and Electronic Engineers, 802.11 (Frequency Hoping, Direct Sequence), 802.11a, 802.1b,* as *well as Home RF, also known as Shared Wireless Access Protocol (SWAP) to those skilled in the art.*

A need has emerged in a number of applications that it is desirable for a device to be able to operate "concurrently" in multiple wireless protocols. One such applications is having a notebook computer being able to communicate with peripheral devices such as a phone, a printer, a scanner and the like, in accordance with the Bluetooth protocol; and with other computing devices, such as other peer computers or servers, communication devices, such as modems or adapters, and networking devices, such as gateways, routers, switches and the like, in accordance with one of the 802.11 protocols or Home RF.

However, the need cannot be met by simply providing the device with multiple transmitters, one for each protocol. The reason is because if multiple ones of these transmitters were to transmit at the same time. The transmitters are going to interfere with each other, resulting in corruption and/or loss of data, as well as degradation in performance.

As will be described in more detail below, the present invention substantially address this need in a very efficient and low cost manner. This and Other advantages of the present invention will be readily apparent from the description to follow.

WO 99/29126 discloses a terminal which can operate simultaneously in a first and second radio communications network. The terminal includes a first transceiver which transmits and receives in the first radio communications network and a second transceiver which transmits and receives in the second radio communication network. The terminal synchronizes transmissions from the transceivers to prevent signal collision.

### SUMMARY OF THE INVENTION

According to one aspect of the invention there is provided a collection of networked apparatuses comprising: a first plurality of apparatuses including first and second subsets wirelessly networked together, with each apparatus being equipped to communicate wirelessly in accordance with a first frequency hopping protocol, with the first and second subsets operating in accordance with a first and a second frequency hopping pattern based on a first and a second pseudo random pattern; a second plurality of apparatuses wirelessly networked together, with each apparatus being equipped to communicate wirelessly in accordance with a second protocol; and a multi-protocol apparatus equipped with a first and a second transceiver to communicate wirelessly with the first and second plurality of apparatuses in accordance with the first and second protocols respectively, wherein the first and second subsets of the first plurality of apparatus are operationally synchronized to a reference signal, and the second plurality of apparatuses are operationally aligned to the same reference signal, and the multi-protocol apparatus includes control logic to operate in a manner that is complementary to the synchronization as well as the alignment with respect to the reference signal, and wherein the control logic includes logic to effectuate the alignment to the reference signal incrementally in a manner depending on an amount of misalignment with a transmission time slot, to reduce interference between the first and second apparatus.

In another aspect, the invention provides an apparatus comprising: a plurality of wireless transceivers to transmit and receive signals in accordance with a first and a second protocol, to and from first and second network devices of a first and second wireless network communicatively coupled to the apparatus, the first network devises comprising first and second subsets that transmit and receive in accordance with a first and second frequency hopping pattern based on a first and a second pseudo random pattern in a synchronized manner, the first protocol being a frequency hopping protocol; and at least one controller manager coupled to the wireless transceivers to control and coordinate operation of the wireless transceivers in a manner that complements the synchronized operation of the first and second subsets of the first network devices to reduce interference among the apparatus and the first and second network devices, wherein the at least one controller manager includes logic to align transmit and receive operations of said wireless transceivers to a reference signal against which the first and second subsets of the first network devices synchronize operations, the alignment to the reference signal being effectuated incrementally in a manner depending on an amount of misalignment with a transmission time slot.

A further aspect provides a method of operating the apparatus of the above-mentioned aspect.

The present invention will be described by way of exemplary embodiments, but not limitations, illustrated in the accompanying drawings in which like references denote similar elements, and in which:
**Figure 1** illustrates an overview of the wireless device of the present invention, in accordance with one embodiment;
**Figure 2** illustrates a period of operation of the wireless devices of **Fig. 1****,** in accordance with one embodiment;
**Figure 3** illustrates the wireless device of **Fig. 1** in further detail, in accordance with one implementation;
**Figure 4** illustrates the operational states and flow of the state machine of **Fig. 3** in further detail, in accordance with one implementation;
**Figure 5** illustrates the wireless device of **Fig. 1** in further detail, in accordance with another implementation;
**Figure 6** illustrates the operational states and flow of the state machine of **Fig. 5** in further detail, in accordance with one implementation;
**Figure 7** illustrates the wireless device of **Fig. 1** in further detail, in accordance with yet another implementation;
**Figures 8a-8b** illustrate a period of operation of the wireless devices of **Fig. 1****,** in accordance with each of two alternate embodiments;
**Figures 9a-9b** illustrate the architecture and operational flow of the wireless device **100** of **Fig. 1** for practicing a selected one of the methods of operation of **Fig. 8a-8b****,** in accordance with one embodiment;
**Figure 10** illustrates a period of operation of the wireless devices of **Fig. 1****,** in accordance with another embodiment;
**Figures 11a-11b** illustrate the architecture and operational flow of the wireless device **100** of **Fig. 1** for practicing the method of operation of **Fig. 11**, in accordance with one embodiment;
**Figure 12** illustrates the concept of notch filtering,
**Figure 13** illustrates an overview of the wireless device of the present invention, in accordance with another embodiment;
***Figure 14*** illustrates another overview of the multi-protocol wireless device of the present invention, along with other wireless devices, in accordance with yet another embodiment; and
**Figure 15** illustrates the concept of synchronized operation of two subsets of devices employing a frequency hopping protocol in accordance with two corresponding frequency hopping patterns.

### DETAILED DESCRIPTION OF THE INVENTION

In the following description, various aspects of the present invention will be described. However, it will be apparent to those skilled in the art that the present invention may be practiced with only some or all aspects of the present invention. For purposes of explanation, specific numbers, materials and configurations are set forth in order to provide a thorough understanding of the present invention. However, it will also be apparent to one skilled in the art that the present invention may be practiced without the specific details. In other instances, well known features are omitted or simplified in order not to obscure the present invention.

Parts of the description will be presented using software terminology commonly employed by those skilled in the art to convey the substance of their work to others skilled in the art. As well understood by those skilled in the art, these software quantities take the form of electrical, magnetic, or optical signals capable of being stored, transferred, combined, and otherwise manipulated through mechanical and electrical components of a digital system; and the term digital system includes general purpose as well as special purpose processors, systems, and the like, that are standalone, adjunct or embedded.

Various operations will be described as multiple discrete steps performed in turn in a manner that is most helpful in understanding the present invention, however, the order of description should not be construed as to imply that these operations are necessarily order dependent, in particular, the order the steps are presented. Furthermore, the phrase "in one embodiment" will be used repeatedly, however the phrase does not necessarily refer to the same embodiment, although it may.

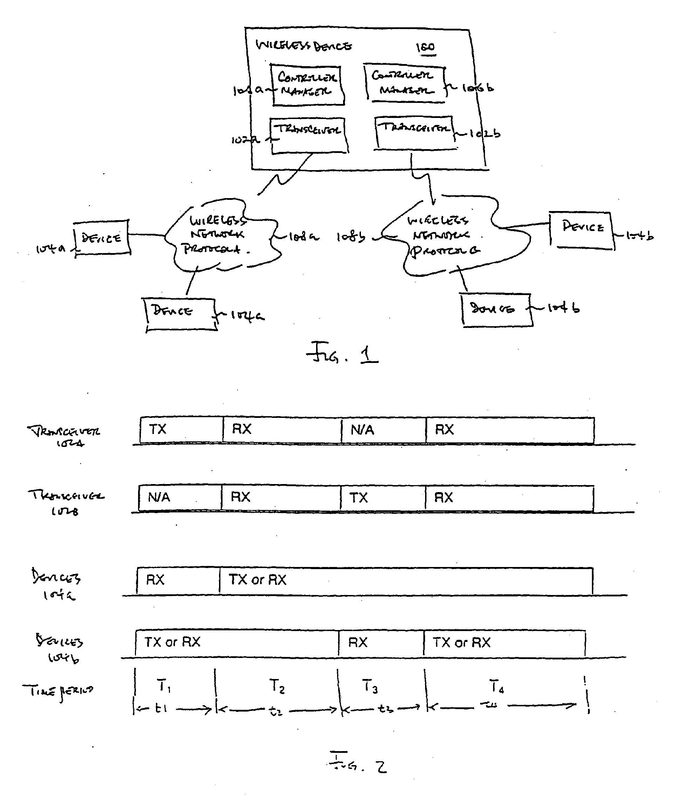

Referring now to **Figure 1****,** wherein an overview of the present invention, in accordance with one embodiment, is shown. As illustrated, wireless device **100** is provided with wireless transceivers **102a** and **102b** to transmit and receive signals wirelessly in accordance with a first and a second wireless communication protocol, to enable device **100** to be communicatively coupled to devices **104a** and devices **104b** of wireless networks **108a** and **108b** respectively. Wireless device **100** further includes controller managers **106a** and **106b** to control the operation of wireless transceivers **102a** and **102b** respectively. As will be described in more detail below, controller managers **106a** and **106b** control transmits and receives by wireless transceivers **102a** and **102b,** in a coordinated manner, in accordance with the present invention, to allow wireless device **100** to operate with devices **104a** and devices **104b** of wireless network **108a** and **108b** in accordance with the respective wireless communication protocols at the same time.

In one embodiment, controller managers **106a** and **106b** control transmits and receives by wireless transceivers **102a** and **102b** (hereinafter, simply transceivers), in a coordinated manner. More specifically, in this embodiment, controller managers **106a** and **106b** control transceivers **102a** and **102b** to alternate between transmits by one of the two transceivers and receives by both of the two transceivers. **Figure 2** illustrates a period of operation in accordance with this embodiment. As shown, in time period T1, for duration t1, control manager **106a** controls transceiver **102a** to perform transmit of signals to devices **104a** of wireless network **108a** (hereinafter, simply network) in accordance with the first wireless communication protocol (hereinafter, simply protocol), while control manager **106b** controls transceiver **102b** to neither perform transmit nor receive of signals to and from devices **104b** of network **108b.** In time period T3, for duration t3, the reverse is performed. Control manager **106b** controls transceiver **102b** to perform transmit of signals to devices **104b** of network **108b** in accordance with the second protocol, while control manager **106a** controls transceiver **102a** to neither perform transmit nor receive of signals to and from devices **104a** of network **108a.** In time periods T2 and T4, for duration t2 and t4 respectively, control managers **106a** and **106b** control both transceivers **102a** and **102b** to perform receive of signals from devices **104a** and **104b** of network **108a** and **108b** in accordance with the respective protocols respectively.

Since all wireless protocols operate on either a carrier sense or contention free protocol, devices **104a** are able to receive in time period T1, and transmit when there are packets to transmit, but otherwise receive, in time periods T2-T4. Likewise, devices **104b** are able to receive in time period T3, and transmit when there are packets to transmit, but otherwise receive, in time periods T1-T2 and T4.

Accordingly, wireless device **100** is able to operate with devices **104a** and **104b** of networks **108a** and **108b** in two wireless protocols at the same time.

Note that time periods T1-T4 may or may not be equal in duration. That is, numerically t1-t4 may or may not be equal. As will be described in more detail below, in different variants of this embodiment, duration t1-t4 of time periods T1-T4 are dynamically and adaptively set. In particular, in some variants, duration t1-t4 of time periods T1-T4 are adaptively set based at least in part of transmit and receive workloads of networks **108a** and **108b.**

Referring back to **Fig. 1****,** except for the teachings of the present invention incorporated in wireless device **100** to effectuate the above described coordinated manner of operation of transceivers **102a** and **102b,** transceivers **102a** and **102b** as well as controller managers **106a** and **106b** are otherwise intended to represent a broad range of these elements known in the art. Accordingly, except for the teachings of the present invention, which will be further described below, transceivers **102a** and **102b** and controller managers **106a** and **106b** will not be otherwise further described.

Wireless device **100** is intended to represent a wide range of devices that can benefit from having the ability to wirelessly operate with other wireless devices in two or more wireless communication protocols at the same time. Examples of device **100** include but not limited to computers of various form factors, such as desktop, notebook, palm size and so forth, controller devices (i.e. master devices) to manage and control the operation of networks **108a** and **108b,** and gateway devices to facilitate communication between devices **104a** and devices **104b.**

Likewise, devices **104a** and **104b** are intended to represent a broad range of devices that can benefit from being able to communicate wirelessly. Examples of devices **104a** include but not limited to phones, video cameras, speakers, modems, printers and scanners equipped to wireless communicate in accordance with the Bluetooth protocol. Examples of devices **104b** include clients and servers, as well as gateways, modems, hubs, routers, and switches equipped to wireless communicate in accordance with a selected variant of the IEEE 802.11 protocols or Home RF.

For ease of understanding, only two groups of devices **104a** and **104b,** communicating in accordance with the first and second wireless communication protocols are shown in **Fig. 1****.** However, from the description to follow, it will be readily apparent to those skilled in the art, the present invention may be practiced with more than two transceivers (as long as the transceivers are likewise coordinated).

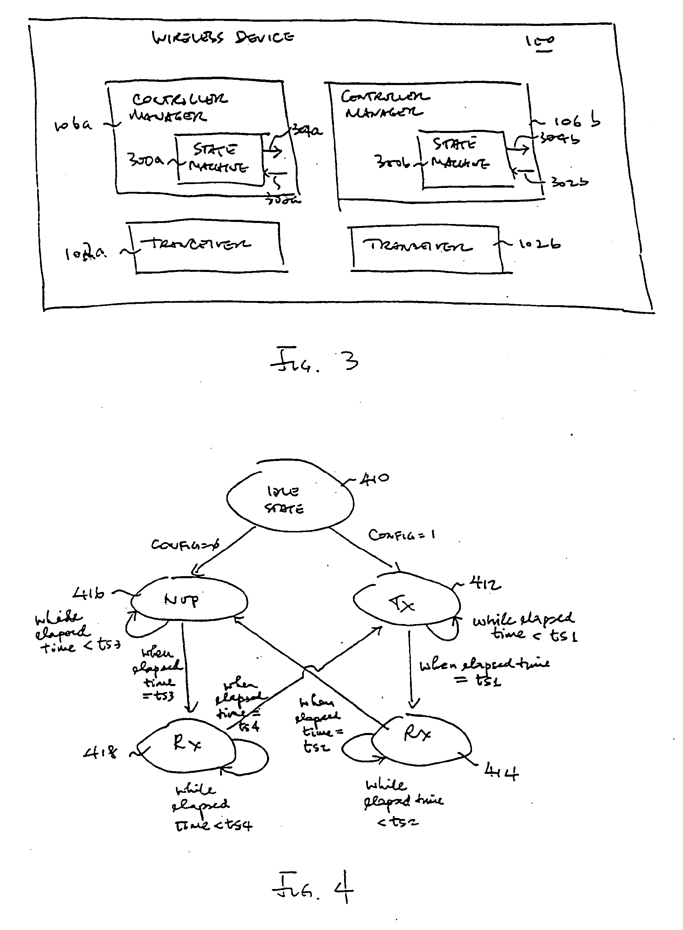

Referring now to **Figures 3** and **4****,** wherein a block diagram and a state diagram illustrating wireless device 100 of **Fig. 1** in further detail, in accordance with one embodiment, are shown. As illustrated, each controller manager **106a/106b** of wireless device **100** is endowed with a state machine **300a/300b** to complementarily assist the controller manager **106a/106b** to control its transceiver **102a/102b** in the above described coordinated manner. More specifically, each state machine **300a/300b,** in addition to idle state **410,** has four operating states **412-418** (TX, RX1, NOP, and RX2) to output a signal **304a/304b** denoting a selected one of a transmit (TX) operation, a receive (RX) operation and no-op (NOP) for its controller manager **106a/106b.**

Upon power-on or reset, each state machine **300a/300b** either transitions from idle state **410** to TX state **412** or NOP state **416,** depending on the state of configuration (config) signal **302a/302b.** One state machine, e.g. **300a,** is configured to transition from idle state **410** to TX state **412,** while the other state machine, e.g. **300b,** is configured to transition from idle state **410** to TX state **412.** Config signal **302a/302b** may be set e.g. via a jumper or other equivalent means, as well as through software.

While in TX state **412,** state machine **300a/300b** remains in the state for duration ts1, outputting signal **304a/304b** denoting TX operation for its controller manager **1026a/106b.** In one embodiment, where t1 and t3 may take on different values, one state machine, e.g. **300a,** is configured with ts1 set to t1, while the other state machine, e.g. **300b,** is configured with ts1 set to t3. Ts1 may be selectively set in any one of a number of techniques known in the art, e.g. through separate registers or multiplexing circuitry. Upon expiration of ts1, state machine **300a/300b** transitions from TX state **412** to RX1 state **414.**

While in RX1 state **414,** state machine **300a/300b** remains in the state for duration ts2, outputting signal **304a/304b** denoting RX operation for its controller manager **106a/106b.** In one embodiment, where t2 and t4 may take on different values, one state machine, e.g. **300a,** is configured with ts2 set to t2, while the other state machine, e.g. **300b,** is configured with ts2 set to t4. Ts2 may likewise be selectively set in any one of a number of techniques known in the art. Upon expiration of ts2, state machine **300a/300b** transitions from RX1 state **414** to NOP state **416.**

While in NOP state **416,** state machine **300a/300b** remains in the state for duration ts3, outputting signal **304a/304b** denoting NOP for its controller manager **106a/106b.** In one embodiment, where t1 and t3 may take on different values, one state machine, e.g. **300a,** is configured with ts3 set to t3, while the other state machine, e.g. **300b,** is configured with ts3 set to t1. Ts3 may likewise be selectively set in anyone of a number of techniques known in the art. Upon expiration of ts3, state machine **300a/300b** transitions from NOP state **416** to RX2 state **418.**

While in RX2 state **418,** state machine **300a/300b** remains in the state for duration ts4, outputting signal **304a/304b** denoting RX operation for its controller manager **106a/106b.** In one embodiment, where t2 and t4 may take on different values, one state machine, e.g. **300a,** is configured with ts4 set to t4, while the other state machine, e.g. **300b,** is configured with ts4 set to t2. Ts4 may likewise be selectively set in any one of a number of techniques known in the art. Upon expiration of ts4, state machine **300a/300b** transitions from RX2 state **418** to TX state **412.**

From TX state **412,** state machine **300a/300b** continues operation as described earlier.

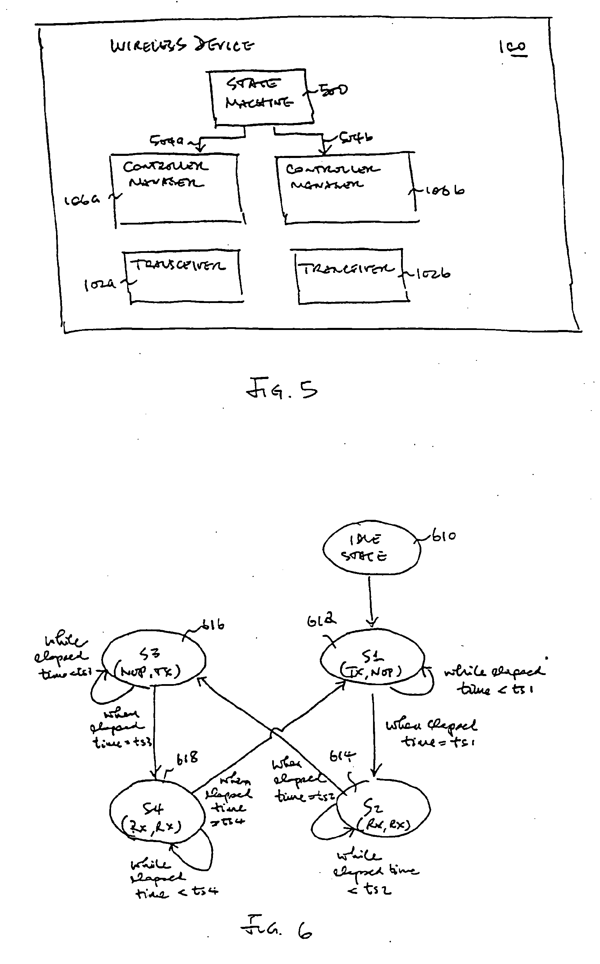

Referring now to **Figures 5** and **6****,** wherein a block diagram and a state diagram illustrating wireless device 100 of **Fig. 1** in further detail, in accordance with another embodiment, are shown. As illustrated, for this embodiment, instead of having each controller manager **106a/106b** of wireless device **100** be endowed with a state machine to complementarily assist the controller manager **106a/106b** to control its transceiver **102a/102b** in the above described coordinated manner, wireless device **100** is endowed with a single state machine **500** to assist both controller managers **106a** and **106b.** Similarly, state machine **500,** in addition to idle state **610,** has four operating states **612-618** (S1 - S4) to output a pair of signals **504a-504b** denoting a selected combination of operations, TX with NOP, both RX, and NOP with TX for controller managers **106a** and **106b.**

Upon power-on or reset, state machine **500** transitions from idle state **610** to S1 state **612.** While in S1 state **612,** state machine **500** remains in the state for duration ts1, outputting signal **504a-504b** denoting TX and NOP for controller managers **106a** and **106b.** Ts1 is set to t1. Upon expiration of ts1, state machine **500** transitions from S1 state **612** to S2 state **614.** While in S2 state **614,** state machine **500** remains in the state for duration ts2, outputting signal **504a-504b** denoting RX for both controller managers **106a** and **106b.** Ts2 is set to t2. Upon expiration of ts2, state machine **500** transitions from S2 state **614** to S3 state **616.**

While in S3 state **616,** state machine **500** remains in the state for duration ts3, outputting signal **504a-504b** denoting NOP and TX for controller managers **106a** and **106b.** Ts3 is set to t3. Upon expiration of ts3, state machine **500** transitions from S3 state **616** to S4 state **618.** While in S4 state **618,** state machine **500** remains in the state for duration ts4, outputting signal **504a-504b** denoting RX for both controller managers **106a** and **106b.** Ts4 is set to t4. Upon expiration of ts4, state machine **500** transitions from S4 state **618** to S1 state **612.**

From S1 state **612,** state machine **500** continues operation as described earlier.

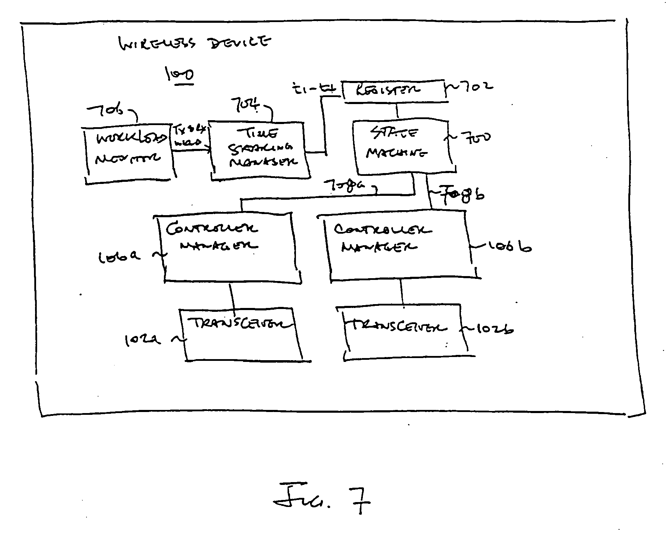

Referring now to **Figure 7****,** wherein a block diagram illustrating wireless device **100** of **Fig. 1** in further detail, in accordance with yet another embodiment, is shown. As illustrated, for this embodiment, in addition to having wireless device **100** be endowed with a single state machine **700** to assist both controller managers **106a** and **106b** as described earlier (with signals **708a-708a** denoting TX-NOP, RX-RX or NOP-TX), wireless device **100** is further endowed with register **702,** time sharing manager **704,** and workload monitor **706** operatively coupled to each other and state machine **700** as shown. Register **702** stores t1-t4 for state machine **700.** Time sharing manager **704** dynamically adjusts t1-t4 to enable state machine **700** be able to adaptively assist controller managers **106a** and **106b** in controlling transceivers **102a** and **102b.** For the illustrated embodiment, time sharing manager **704** dynamically adjusts t1-t4 based at least in part on transmit and receive workloads of networks **108a** and **108b.** Transmit and receive workloads are monitored by workload monitor **706** and provided to time sharing manager **704.**

Register **702** may be constituted with any storage circuitry known in the art. Time sharing manager **704** and workload monitor **706** may be implemented with any combinatorial logic or in software.

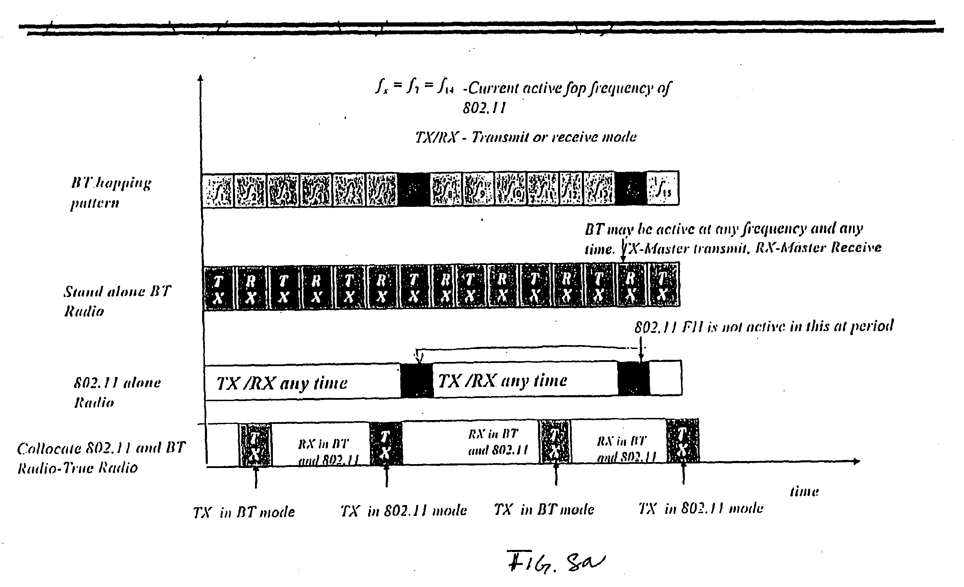

Referring now to **Figures 8a-8b****,** wherein a period of operation for the wireless devices of **Fig. 1** in accordance with each of two alternate embodiments are shown. In each of these two alternate embodiments, first protocol of wireless devices **104a** of network **108a** is assumed to be a frequency hopping protocol as shown, i.e. wireless devices **104a** hop from frequency to frequency in accordance with a pseudo random pattern to transmit signals. For ease of understanding, second protocol of wireless devices **104b** of network **108b** is assumed to be a constant frequency protocol (although in alternate embodiments, it may also be a frequency hopping protocol). In any event, to illustrate the present invention, at least one of the frequencies of the first protocol is the same frequency of the second protocol. Thus, if some of devices **104a** and **104b** are located sufficiently close to each other, and when one of devices **104a** selects the same frequency for transmission, interference (or collision) between these devices will occur, resulting in one or more transmission failures. For the illustrated example, frequency interference (or collision) is shown to occur at the 7^{th} and 14^{th} hop (f₇ and f₁₄). That is, in accordance with the pseudo random pattern, in each of these two hops, devices **104a** transmit in the same frequency employed by devices **104b.** An example of a frequency hopping protocol is the Bluetooth protocol, and an example of a protocol having an interfering frequency with Bluetooth is the 802.11 protocol. [Note that the example interference at the 7^{th} and 14^{th} hop is not intended to suggest that the interference occurs at every 7^{th} hop. The interference pattern is dictated by the intersection of the pseudo random pattern followed by the frequency hopping devices **104a** and the frequency employed by devices 104b.]

To further improve the operating efficiencies of both network, instead of just letting the interfering devices **104a** and **104b** resolve each of the frequency interference, after it occurred, through conventional collision detection, back off and retry approaches, wireless device **100** coordinates the operation of devices **104a** and **104b** to proactively reduce actual occurrence of interference. More specifically, for the illustrated embodiments, either devices **104a** or devices **104b** are selected to be the "dominant" devices. The non-selected devices are considered to be the dominated devices. The dominated devices are notified, from time to time, to suspend operation to pro-actively avoid interference with the dominant devices, allowing the dominant devices to continue to operate without interference. As result, the time consuming collision detection, back off and retries are substantially reduced, and experience has shown that the overall operating efficiencies of both networks improve, the dominated network as well as the dominant network.

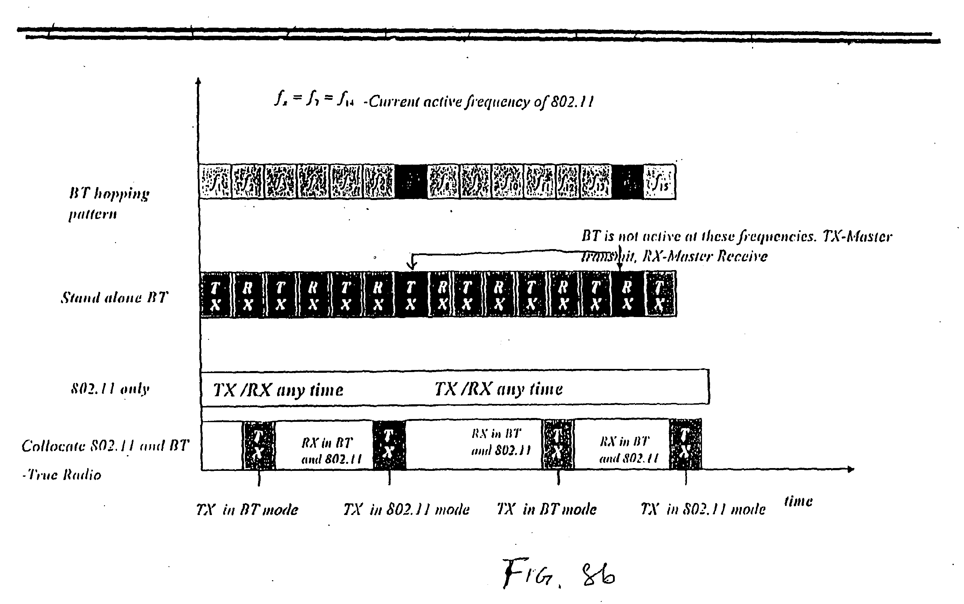

**Fig. 8a** illustrates a period of operation when devices **104a,** the frequency hopping devices, are selected to be the dominant devices, while **Fig. 8b** illustrates a period of operation when devices **104b** are selected to be the dominant devices. That is, under **Fig. 8a****,** devices **104b,** upon informed, will temporarily suspend operation to proactively avoid interference, whereas under **Fig. 8b****,** devices **104a,** upon informed, will temporarily suspend operation to proactively avoid interference.

Under either one of these embodiments, wireless device **100** basically operates as earlier described. Except wireless device **100** assumes the additional responsibilities of determining the pseudo random frequency hopping pattern of devices **104a** (in one embodiment, including the interfering frequency), selecting either devices **104a** or **104b** to be the dominated devices, predicting the occurrence of interference, and preemptively notifying the dominated devices to suspend operation to avoid interference (in one embodiment, conditionally suspending operation).

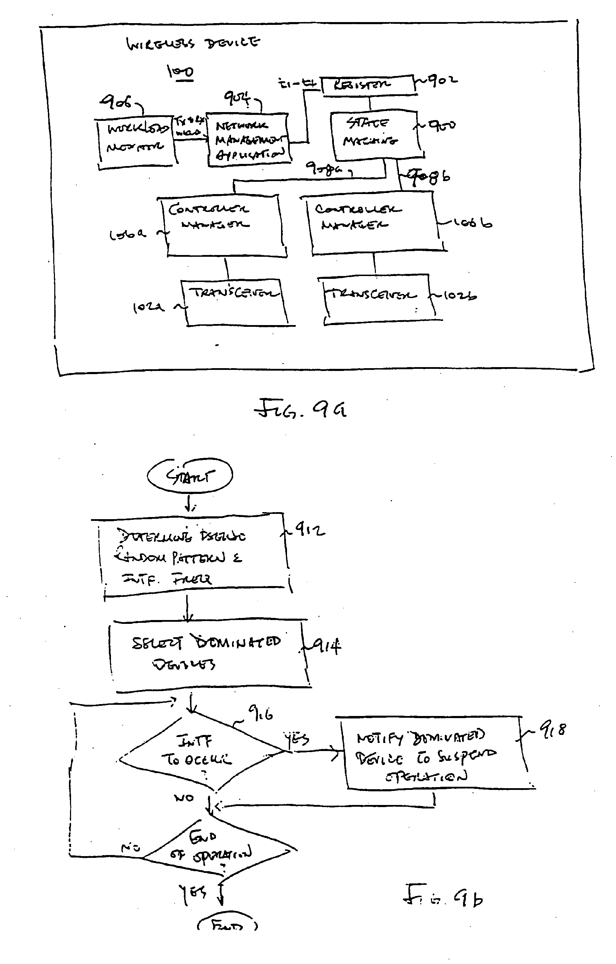

Referring now to **Figs. 9a-9b****,** wherein the architecture and operational flow of wireless device **100** having these added responsibilities are shown. As illustrated in **Fig. 9a****,** wireless device **100** is basically the embodiment earlier described referencing **Fig. 7****,** except wireless device **100** is further provided with network management application (or network manager) **904** to proactively managing network devices **104a** and **104b** to reduce actual occurrence of interference. Network manager **904** also subsumes the earlier described responsibilities of time sharing manager **704,** i.e. monitoring the workloads of the two protocols, and adaptively setting the values of t1-t4 for time period T1-T4.

Operationally, as illustrated in **Fig. 9b****,** upon initialization, network manager **904** monitors the operation of devices **104a** and **104b** for an observation period, and determines the pseudo random frequency hopping pattern followed by devices **104a** (and in one embodiment, the interfering frequency with devices **104b), 912.** This may be accomplished using any one of a number of techniques known in the art. Next, network manager **904** selects either devices **104a** or devices **104b** to be the dominant devices, **914.** In one embodiment, network manager **904** makes the selection in accordance with configuration information programmed in configuration register **902.** In alternate embodiments, other configuration registers, or other techniques known in the art, such as jumpers, may also be employed to assist network manager **904** in making the selection.

Then, on an on going basis, network manager **904,** predicts when interference will occur, using the determined pseudo random pattern and interference frequency, **916.** Whenever, an interference is to occur, network manager **904** preemptively notifies the dominated devices to suspend operation accordingly, thereby allowing the dominant devices to operate without interference, **918.** [In one embodiment, if the dominated devices are devices **104a,** the notification includes the interfering frequency, and the suspension is conditional, only if the predicted frequency is indeed the interfering frequency.] The process continues, as long as there are wireless devices of both types **104a** and **104b** operating.

In one embodiment, network manager **904** repeats the calibration periodically. In yet another embodiment, network manager **904** monitors actual interference between devices **104a** and **104b,** and tracks the mean time between interference. Network manager **904** repeats the calibration, whenever the tracked mean time between interference drops below certain given performance level.

Note that in embodiments where the number of devices **104a** and **104b** present in networks **108a** and **108b** are relatively small, including in particular, the simplest case where there is only one device **104a** and one device **104b** in networks **108a** and **108** respectively, network manager **904** may make the selection of the dominated devices in a dynamic and individualized manner, when an interference is predicted to occur. That is, different device or devices **104a** and **104b** are dynamically and individually selected for different predictions of interference. Such dynamic, individualized manner of selection may also be made in view of the workloads of the two protocols.

As those skilled in the art would appreciate, the above described improved manner of operation (including the embodiment, where suspension is to be conditionally made by devices **104a**) may be practiced with minimal or no change to devices **104,a** and **104a,** as virtually all network devices are capable of temporarily suspending operation responsive to a request. As to the embodiment where suspension is to be conditionally made by devices **104a,** the conditional performance may be effectuated through addition of simple frequency testing combinatorial logic.

Additionally, in yet other embodiments, upon selecting the dominated devices at **914,** wireless device **100** notifies devices **104a** and **104b** of their respective roles, i.e. whether they are the dominating devices or dominated devices. Further, at least the dominated devices are also provided with a collision map, for the dominated devices to self determine whether interference is to occur. In other words, operation **916** is distributed to the dominated devices, and operation **918** is eliminated.

In yet other embodiments where the wireless protocol is a frequency hopping protocol successively employing a number of frequencies in a pseudo random manner, independent of whether the interference determination is performed by wireless device **100** or the dominated devices, the determination of interference further includes prospectively anticipating whether the transmission of a long packet by a dominated device operating in accordance with such frequency hopping protocol will cause interference with the dominating devices. A long packet is a packet whose transmission spans multiple ones of the frequency hops. The dominated devices either self-determine or instructed by wireless device **100** (depending on implementations) to refrain from starting such transmission of a long packet unless interference will not occur.

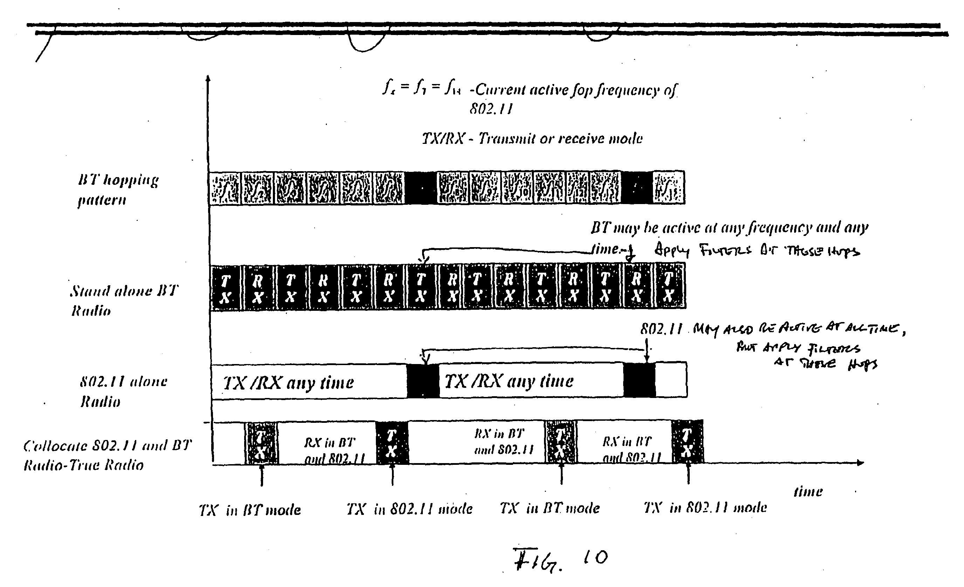

Referring now to **Figure 10****,** wherein a period of operation for the wireless devices of **Fig. 1** in accordance with another embodiment is shown. Again, first protocol of wireless devices **104a** of network **108a** is assumed to be a frequency hopping protocol, and second protocol of wireless devices **104b** of network **108b** is assumed to be a constant frequency protocol (although it may also be a frequency hopping protocol). Nevertheless, for illustrative purpose, it is suffice that at least one of the frequencies of the first protocol of wireless devices **104a** conflicts with the frequency of the second protocol of wireless devices **104b** as shown, and earlier described. Thus, in like manner, if some of devices **104a** and **104b** are located sufficiently close to each other, and devices **104a** select to transmit in the same frequency, interference (or collision) will occur, resulting in one or more transmission failures. To further improve the operating efficiencies of both network, instead of just letting the interfering devices **104a** and **104b** resolve each of the frequency interference, after it occurred, through conventional collision detection, back off and retry approaches, wireless device **100** coordinates the operation of devices **104a** and **104b** to proactively reduce actual occurrence of interference. More specifically, under this embodiment, devices **104a** and **104b** are correspondingly notified of the filtering to be employed to correspondingly cancel the respective interfering signals, and when to apply the filtering. As will be described in more detail below, in one embodiment, the filtering to be employed is a notch filter inversely formed in accordance with the other devices' signal. As a result, the time consuming collision detection, back off and retries are also substantially reduced, and experience has shown that the overall operating efficiencies of both networks also improve.

As illustrated in **Fig. 10****,** at each predicted occurrence of interference, both devices **104a** and **104b** apply the corresponding required filtering to correspondingly cancel the respective interfering signals. As before, the basic operations of wireless device **100** remain substantially unchanged, except, wireless device **100** assumes the additional responsibilities of determining the pseudo random frequency hopping pattern of devices **104a,** the interfering frequency, the corresponding filtering to be employed to cancel the respective interfering signals, and preemptively notifying devices **104a** and **104b** of the determined filtering as well as when to apply them.

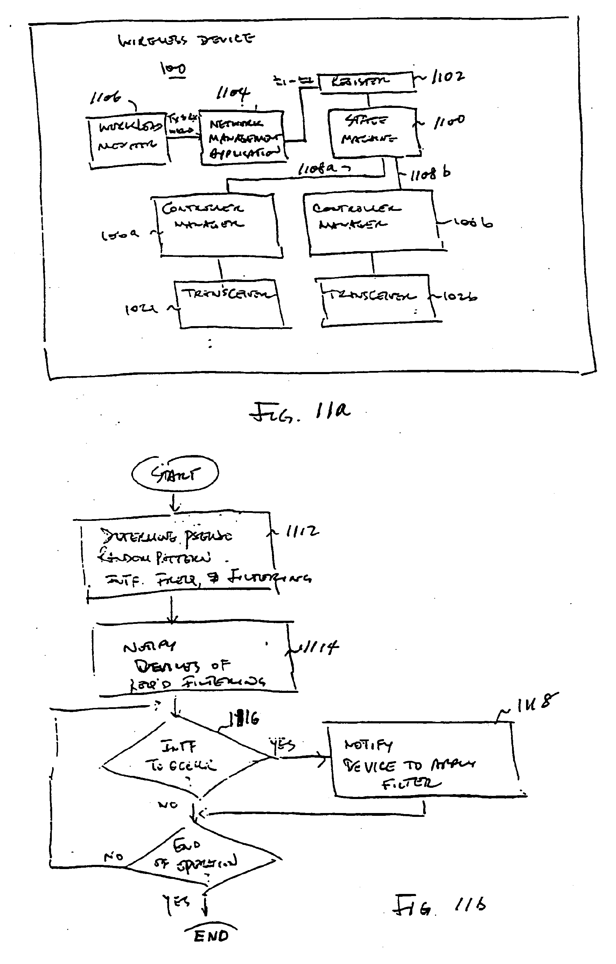

Referring now to **Figs. 11a-11b****,** wherein the architecture and operational flow of wireless device **100** having these added responsibilities are shown. As illustrated in **Fig. 11a****,** wireless device **100** is basically the embodiment earlier described referencing **Fig. 9a****.** That is, wireless device **100** is also additionally provided with network manager **1104,** except the additional responsibilities assumed by network manager **1104** to proactively reduce interference are slightly different.

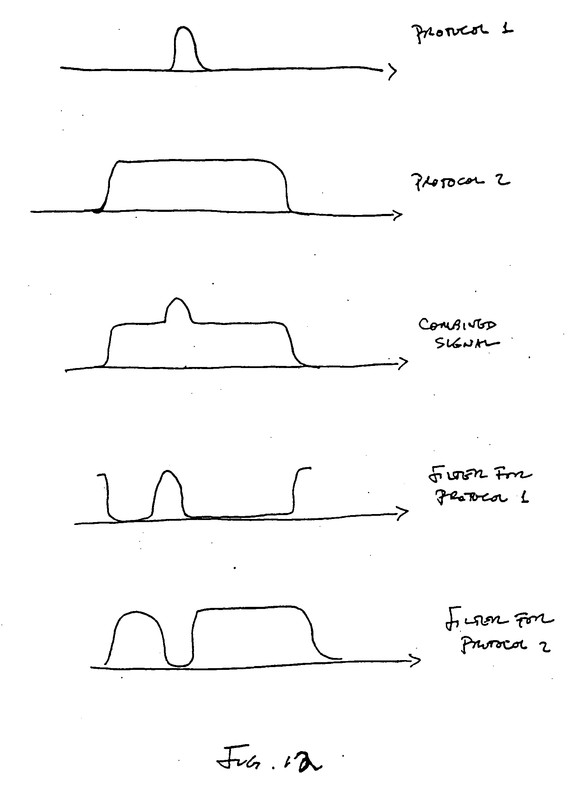

As illustrated in **Fig. 11b****,** upon initialization, network manager **1104** monitors the operation of devices **104a** and **104b** for an observation period, and determines the pseudo random frequency hopping pattern followed by devices **104a,** and the interfering frequency with devices **104b, 1112.** This again may be accomplished using any one of a number of techniques known in the art. Next, network manager **1104** determines the corresponding filtering to be employed by devices **104a** and **104b** to correspondingly cancel their respective interfering signals of "the other devices", and provides the determined information to devices **104a** and **104b, 1114**. In one embodiment, as alluded to earlier, the corresponding filtering to be employed are notched filters inversely constructed in accordance with the other devices' signals (see **Fig. 12**). That is, devices **104a** are to apply a notch filter, inversely formed in accordance with transmit signals of devices **104b,** whereas, devices **104b** are to apply a notch filter, inversely formed in accordance with transmit signals of devices **104a.** [Notch filters in general are known in the art, and will not be further described.]

Then, on an on going basis, network manager **1104,** predicts when interference will occur, using the determined pseudo random pattern and interference frequency, **1116.** Whenever, an interference is to occur, network manager **1104** preemptively notifies devices **104a** and **104b** to correspondingly apply their corresponding filtering, thereby allowing both devices **104a** and **104b** to operate without interference, **1118.** The process continues, as long as there are wireless devices of both types **104a** and **104b** operating. [Likewise, the application of filtering by devices **104a** may also be conditionally performed, only if the frequency is indeed the same as the interfering frequency.]

As before, in one embodiment, network manager **1104** repeats the calibration periodically. In yet another embodiment, network manager **1104** monitors actual interference between devices **104a** and **104b,** and tracks the mean time between interference. Network manager **1104** repeats the calibration, whenever the tracked mean time between interference drops below certain given performance level.

As those skill in the art will appreciate, the immediately described improved manner of operation may also be practiced with minimal change to devices **104a** and **104a,** by equipping both types of network devices with the ability to responsively apply notch filtering. [Likewise, devices **104a** may be additionally provided with simple combinatorial logic to effectuate the conditional application of notch filtering.]

Similar to the embodiments described with references to **Figs. 8a-8b** and **9a-9b,** in yet other embodiments, in addition to notifying the devices of the required filtering at **1114,** wireless device **100** provides the devices with a collision map, such that the devices can self determine whether interference is to occur, and the appropriate filtering to be applied. In other words, operation **1116** is distributed to the devices, and operation **1118** is eliminated.

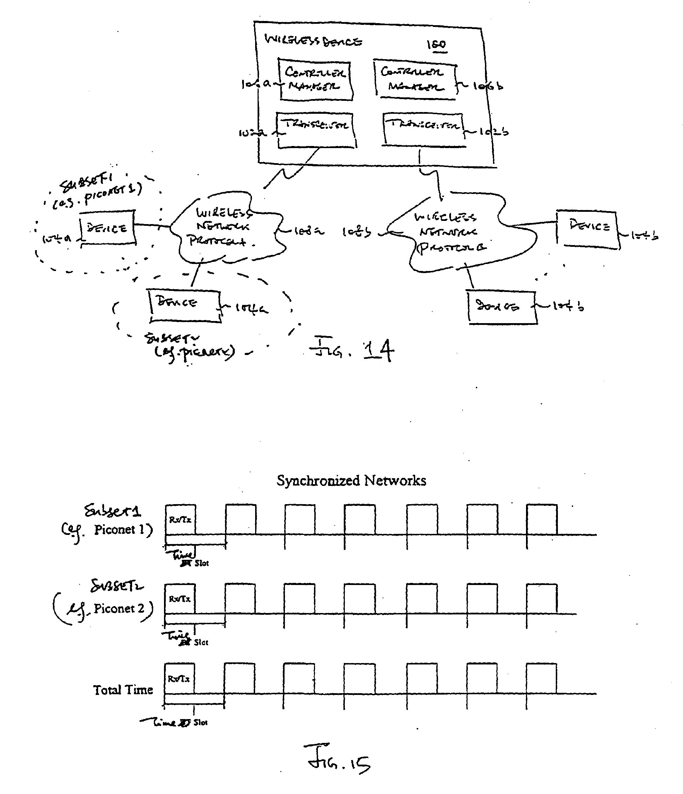

Skipping now to **Figure 14**, wherein another overview of wireless device **100** of the present invention, along with devices **104a** and **104b** of wireless networks **108a** and **108b** are shown, in accordance with another embodiment. In this embodiment, the devices additionally operate in a complementary manner to proactively reduce interference among the devices. For illustrative purpose, wireless devices **104a** are assumed to employ a frequency hopping protocol. Moreover, wireless devices **104a** are subdivided into at least two subsets, with the devices of the two subsets employing successive frequencies in accordance with at least two corresponding pseudo random patterns. [In one embodiment, where the frequency hopping protocol is Bluetooth, each subset corresponds to a "piconet". Note that even though for ease of understanding, only one device **104a** is illustrated in each of the subset, the present invention may be practiced with each subset having one or more devices.]]

In accordance with the present invention, to effectuate the desired proactive reduction of interference, the various subsets of devices **104a** are operated in a synchronized manner (see **Fig. 15**). In one embodiment, the synchronization is effectuated by synchronizing transmit and receive operations of the various subsets to a reference signal. In one embodiment, the reference signal is provided by one of devices **104b.** In other embodiments, the reference signal is provided by yet another device (not shown). Complementarily, devices **104b** are also operated with transmit and receive operations aligned to the reference signal.

For this embodiment, in addition to having been incorporated with one or more of the novel features earlier described, wireless device **100** is further equipped to operate in a manner that is complementary to the synchronized operation of devices **104a** and the aligned operation of devices **104b,** to effectuate the desired reduction of interference among the devices. In particular, one or both controller managers **106a** and **106b** are equipped to enable the two controller managers **106a** and **106b** to operate with aligned control clocks for the two protocols.

More specifically, in one embodiment, controller manager or managers **106a** and/or **106b** are equipped such that when wireless device **100** joins wireless network **108b** after having begun communication with devices **104a** of at least one of the subsets, wireless device **100** would cause the two control clocks for the two protocols to be aligned incrementally. In one embodiment, the incremental alignment is effectuated in a dependent manner, depending on the amount of misalignment with respect to a transmission time slot. In one embodiment, the incremental alignment is effectuated by decrementing the start time of a transmission time slot by a predetermined amount for m successive transmission time slots if the amount of misalignment is less than half of the transmission time slot size, or by incrementing the start time of a transmission time slot by a predetermined amount for n successive transmission time slots if the amount of misalignment is less than half of the transmission time slot size.

In other words, if the transmission periods for the protocol employed by devices **104b** are 0, B, 2B, ..., kB (0 <= k < 2⁶⁴), and the transmission time slots of the protocol employed by devices **104a** start at d, d+S, d+2S, ..., d+mS etc (0 <= d < S), the start time of a transmission time slot of the protocol of network **108a** can be adjusted successively by t micro seconds for m or n successively transmission time slots, depending on whether d is less than or equal to S/2 or greater than S/2. In one embodiment, S is 625 micro seconds, and t is set to 8 micro seconds. For this embodiment, if d is less than or equal to S/2, m is set to the largest integer smaller than d/8, whereas if d is greater than S/2, n is set to the largest integer smaller than S - d/8.

In other embodiments, other criteria andlor parameters, even other incremental approaches may be employed instead. In one embodiment, the incremental alignment is repeated; however only after waiting for at least predetermined number of transmission time slots to "dampen oscillations". In one embodiment, the predetermined number of transmission time slots waited is 10. In other embodiments, different waiting periods may be used instead.

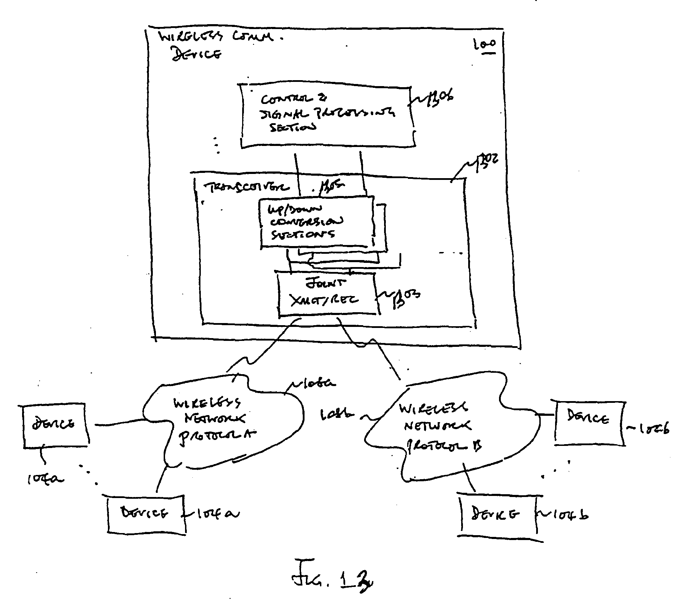

Referring now to **Figure 13****,** wherein an overview of the present invention, in accordance with another embodiment, is shown. Similar to the embodiment of **Fig. 1****,** wireless device **100** is communicatively coupled to devices **104a** and devices **104b** of wireless networks **108a** and **108b** respectively. Wireless device **100** performs transmits and receives of the two protocols, in a coordinated manner, to allow wireless device **100** to operate with devices **104a** and devices **104b** of wireless network **108a** and **108b** in accordance with the respective protocols at the same time. However, unlike *all the earlier described embodiments,* wireless device **100** is provided with a single wireless transceiver **1302,** which includes joint signal transmit/receive section **1303,** and a number of transmit and receive signals up/down conversion sections **1205** sharing joint signal transmit/receive section **1303.** Wireless device **100** further includes controller/signal processing (C/SP) section **1306** to process data for transmission by wireless transceiver **1302,** to process signals received by wireless transceiver **1302,** and to control the data/signal processing operations as well as the operation of wireless transceiver **1302.** The constitution and operations of wireless device **100** is the subject of the second parent application, number *09*/*436,458,* which is hereby fully incorporated by reference. Additionally, in some embodiments, wireless device **100** is endowed with a network manager equipped with the capabilities earlier described referencing **Figs. 8a-8b** and **9a-9b,** with or without the prospective interference anticipation for long packets. In other embodiments, wireless device **100** is endowed with a network manager equipped with the capabilities earlier described referencing **Figs. 10** and **11a****-11b.** In yet other embodiments, wireless device **100** is endowed with the capabilities earlier described referencing **Figs. 14** and **15*****.*** In one words, the capabilities and methods of operations described referencing **Figs 8a-8b** and **9a-9b,** **Figs. 10** and **11a****-11b,** and ***Figs. 14-15******,*** may be practiced with the multiple protocol wireless apparatus of the first parent application, number 09/408,725, or the multiple protocol wireless apparatus of the second parent application.

Thus, a wireless device equipped to substantially operate currently with multiple wireless communication protocols, and various associated methods of operations, including proactive reduction of interference, have been described. While the present invention has been described in terms of the above illustrated embodiments, those skilled in the art will recognize that the invention is not limited to the embodiments described. The present invention can be practiced with modification and alteration within the scope of the appended claims. The description is thus to be regarded as illustrative instead of restrictive on the present invention.

## Claims

1. A collection of networked apparatuses comprising:
a first plurality of apparatuses (104a) including first and second subsets wirelessly networked together, with each apparatus (104a) being equipped to communicate wirelessly in accordance with a first frequency hopping protocol, with the first and second subsets operating in accordance with a first and a second frequency hopping pattern based on a first and a second pseudo random pattern;
a second plurality of apparatuses (104b) wirelessly networked together, with each apparatus (104b) being equipped to communicate wirelessly in accordance with a second protocol; and
a multi-protocol apparatus (100) equipped with a first and a second transceiver (102a, 102b) to communicate wirelessly with the first and second plurality of apparatuses (104a, 104b) in accordance with the first and second protocols respectively, wherein the first and second subsets (1 04a) of the first plurality of apparatus are operationally synchronized to a reference signal, and the second plurality of apparatuses (104b) are operationally aligned to the same reference signal, and the multi-protocol apparatus (100) includes control logic to operate in a manner that is complementary to the synchronization as well as the alignment with respect to the reference signal, and wherein the control logic includes logic to effectuate the alignment to the reference signal incrementally in a manner depending on an amount of misalignment with a transmission time slot, to reduce interference between the first and second apparatus (104a, 104b).

2. A collection of apparatuses according to claim 1, wherein the logic decrements a transmission time slot starting time by a predetermined for m successive transmission time slots if the amount of misalignment is less than half of a transmission time slot size.

3. A collection of apparatuses according to claim 1, wherein the logic increments a transmission time slot starting time by a predetermined amount for n successive transmission time slots if the amount of misalignment is greater than half of a transmission time slot size.

4. An apparatus (100) comprising:
a plurality of wireless transceivers (102a, 102b) to transmit and receive signals in accordance with a first and a second protocol, to and from first and second network devices (104a, 104b) of a first and second wireless network (108a, 108b) communicatively coupled to the apparatus (100), the first network devises (104a) comprising first and second subsets that transmit and receive in accordance with a first and second frequency hopping pattern based on a first and a second pseudo random pattern in a synchronized manner, the first protocol being a frequency hopping protocol; and
at least one controller manager (106a, 106b) coupled to the wireless transceivers (102a, 102b) to control arid coordinate operation of the wireless transceivers (102a, 102b) in a manner that complements the synchronized operation of the first and second subsets of the first network devices (104a) to reduce interference among the apparatus (100) and the first and second network devices (104a and 104b), wherein the at least one controller manager (106a, 106b) includes logic to align transmit and receive operations of said wireless transceivers (102a, 102b) to a reference signal against which the first and second subsets of the first network devices (104a) synchronize operations, the alignment to the reference signal being effectuated incrementally in a manner depending on an amount of misalignment with a transmission time slot.

5. The apparatus of claim 4, wherein the logic decrements a transmission time slot starting time by a predetermined amount for m successive transmission time slots if the amount of misalignment is less than half of a transmission time slot size.

6. The apparatus of claim 4, wherein the logic increments a transmission time slot starting time by a predetermined amount for n successive transmission time slots if the amount of misalignment is greater than half of a transmission time slot size.

7. The apparatus of claim 4, wherein the first protocol is Bluetooth, and the second protocol is a protocol selected from a group consisting of 802.11 frequency hopping, 802.11 direct sequence, 802.11a, 802.11b, and Home RF.

8. The apparatus of claim 4, wherein the apparatus is a computer having a form factor selected from a group consisting of a desktop type, a notebook type and a palm sized type.

9. A method of operating an apparatus (100) having a first and second wireless transceiver (102a, 102b), the method comprising:
(a) controlling the first wireless transceiver (102a) to transmit and receive data to and from first and second subsets of first network devices (104a) of a first wireless network (108a) in accordance with a first protocol which is a frequency hopping protocol, and in a manner that is complementary to a synchronized manner of operation of the first and second subsets of the first network devices (1 04a) in accordance with first and second frequency hopping patterns based on first and second pseudo random patterns respectively; and
(b) controlling the second wireless transceiver (102b) to transmit and receive data to and from second network devices (104b) of a second wireless network (108b) in accordance with a second protocol, and in a manner that is complementary to an aligned manner of operation of the second network devices (104b) to synchronous operation of the first and second subsets of the first network devices (104a), wherein the complementary manners of controlling comprise aligning transmit and receive operations of the first and second wireless transceivers (102a, 102b) to a reference signal against which the first and second subsets of the first network devices (104a) synchronize operations, the alignment to the reference signal being effectuated incrementally in a manner depending on an amount of misalignment with a transmission time slot.

10. The method of claim 9 wherein the incremental alignment comprises decrementing a transmission time slot starting time by a predetermined amount for m successive transmission time slots if the amount of misalignment is less than half of a transmission time slot size.

11. The method of claim 9, wherein the incremental alignment comprises incrementing a transmission time slot starting time by a predetermined amount for n successive transmission time slots if the amount of misalignment is greater than half of a transmission time slot size.

## Patentansprüche

1. Netzwerkvorrichtungs-Gruppe, umfassend:
eine erste Vielzahl an Vorrichtungen (104), die eine erste und eine zweite drahtlos miteinander vernetzte Untergruppe umfasst, wobei jede Vorrichtung (104a) ausgestattet ist, um in Übereinstimmung mit einem ersten Frequenzsprungverfahrenprotokoll mit der ersten und zweiten Untergruppe, die in Übereinstimmung mit einem ersten und zweiten Frequenzsprungverfahrenmuster basierend auf einem ersten und zweiten pseudozufälligen Muster betrieben werden, drahtlos zu kommunizieren;
eine zweite Vielzahl an drahtlos miteinander vernetzten Vorrichtungen (104b), wobei jede Vorrichtung (104b) ausgestattet ist, um in Übereinstimmung mit einem zweiten Protokoll drahtlos zu kommunizieren; und
eine Mehrfachprotokoll-Vorrichtung (100), die mit einem ersten und zweiten Sende-Empfangsgerät (102a, 102b) ausgestattet ist, um mit der ersten und zweiten Vielzahl an Vorrichtungen (104a, 104b) in Übereinstimmung mit einem ersten bzw. zweiten Protokoll drahtlos zu kommunizieren, wobei die erste und zweite Untergruppe (104a) der ersten Vielzahl an Vorrichtungen wirksam mit einem Referenzsignal synchronisiert sind und die zweite Vielzahl an Vorrichtungen (104b) wirksam auf dasselbe Referenzsignal ausgerichtet ist und die Mehrfachprotokoll-Vorrichtung (100) eine Steuerlogik umfasst, die auf eine Weise betrieben wird, welche zu der Synchronisation sowie zu der Ausrichtung in Bezug auf das Referenzsignal komplementär ist und wobei die Steuerlogik eine Logik umfasst, die die Ausrichtung auf das Referenzsignal inkrementell auf eine Weise bewirkt, die von dem Ausmaß der Fehlausrichtung mit einem Übertragungs-Zeitschlitz abhängt, um Interferenzen zwischen der ersten und der zweiten Vorrichtung (104a, 104b) zu reduzieren.

2. Vorrichtungsgruppe nach Anspruch 1, worin die Logik die Übertragungs-Zeitschlitz-Beginnzeit um ein vorbestimmtes Ausmaß für m nacheinander erfolgende Übertragungs-Zeitschlitze dekrementiert, wenn das Ausmaß der Fehlausrichtung weniger als die Hälfte einer Übertragungs-Zeitschlitzgröße beträgt.

3. Vorrichtungsgruppe nach Anspruch 1, worin die Logik die Übertragungs-Zeitschlitz-Beginnzeit um ein vorbestimmtes Ausmaß für n nacheinander erfolgende Übertragungs-Zeitschlitze inkrementiert, wenn das Ausmaß der Fehlausrichtung mehr als die Hälfte einer Übertragungs-Zeitschlitzgröße beträgt.

4. Vorrichtung (100), umfassend:
eine Vielzahl an Drahtlos-Sende-Empfangsgeräten (102a, 102b) zum Senden und Empfangen von Signalen in Übereinstimmung mit einem ersten und zweiten Protokoll zu und von einer ersten und zweiten Netzwerkvorrichtung (104a, 104b) eines ersten und zweiten Drahtlos-Netzwerks (108a, 108b), die mit der Vorrichtung (100) kommunikativ gekoppelt sind, wobei die erste Netzwerkvorrichtung (104a) eine erste und zweite Untergruppe umfasst, die in Übereinstimmung mit einem ersten und zweiten Frequenzsprungverfahrenmuster basierend auf einem ersten und einem zweiten pseudozufälligen Muster auf synchronisierte Weise senden und empfangen, wobei das erste Protokoll ein Frequenzsprungverfahrenprotokoll ist; und
zumindest einen Steuerungsmanager (106a, 106b), der mit den Drahtlos-Sende-Empfangsgeräten (102a, 102b) gekoppelt ist, um den Betrieb der Drahtlos-Sende-Empfangsgeräte (102a, 102b) auf eine Weise derart zu steuern und zu koordinieren, dass er den synchronisierten Betrieb der ersten und zweiten Untergruppe der ersten Netzwerk-Vorrichtung (104a) ergänzt, um Interferenzen zwischen der Vorrichtung (100) und der ersten und zweiten Netzwerkvorrichtung (104a und 104b) zu reduzieren, wobei der zumindest eine Steuerungsmanager (106a, 106b) eine Logik umfasst, um den Sende- und Empfangsbetrieb der Drahtlos-Sende-Empfangsgeräte (102a, 102b) mit einem Referenzsignal auszurichten, in Bezug auf welches die erste und zweite Untergruppe der ersten Netzwerkvorrichtung (104a) ihren Betrieb synchronisieren, wobei die Ausrichtung auf das Referenzsignal inkrementell auf eine Weise bewirkt wird, die von dem Ausmaß der Fehlausrichtung mit einem Übertragungszeitschlitz abhängt.

5. Vorrichtung nach Anspruch 4, worin die Logik eine Übertragungs-Zeitschlitz-Beginnzeit um ein vorbestimmtes Ausmaß für m nacheinander erfolgende Übertragungs-Zeitschlitze dekrementiert, wenn das Ausmaß der Fehlausrichtung weniger als die Hälfte der Übertragungs-Zeitschlitzgröße beträgt.

6. Vorrichtung nach Anspruch 4, worin die Logik die Übertragungs-Zeitschlitz-Beginnzeit um ein vorbestimmtes Ausmaß für n nacheinander erfolgende Übertragungs-Zeitschlitze inkrementiert, wenn das Ausmaß der Fehlausrichtung mehr als die Hälfte der Übertragungs-Zeitschlitzgröße beträgt.

7. Vorrichtung nach Anspruch 4, worin das erste Protokoll Bluetooth ist und das zweite Protokoll aus der aus 802.11-Frequenzsprungverfahren, 802.11-Direktsequenz, 802.11a, 802.11b und Home-RF bestehenden Gruppe ausgewählt ist.

8. Vorrichtung nach Anspruch 4, worin die Vorrichtung ein Computer mit einem Formfaktor ist, der aus der aus einem Desktop-Typ, einem Notebook-Typ und einem Palmtop-Typ bestehenden Gruppe ausgewählt ist.

9. Verfahren zum Betreiben einer Vorrichtung (100) mit einem ersten und zweiten Drahtlos-Sende-Empfangsgerät (102a, 102b), wobei das Verfahren Folgendes umfasst:
(a) Steuern des ersten Drahtlos-Sende-Empfangsgeräts (102a) zum Senden und Empfangen von Daten zu und von der ersten und zweiten Untergruppe der ersten Netzwerkvorrichtung (104a) eines ersten Drahtlosnetzwerks (108a) in Übereinstimmung mit einem ersten Protokoll, welches ein Frequenzsprungverfahrenprotokoll ist, und auf eine Weise, die mit der Synchronisierungsweise des Betriebs der ersten und zweiten Untergruppe der ersten Netzwerkvorrichtung (104a) in Übereinstimmung mit dem ersten und zweiten Frequenzsprungverfahrenmuster basierend auf dem ersten bzw. zweiten pseudozufälligen Muster komplementär ist; und
(b) Steuern des zweiten Drahtlos-Sende-Empfangsgeräts (102b) zum Senden und Empfangen von Daten zu und von der zweiten Netzwerkvorrichtung (104b) eines zweiten Drahtlosnetzwerks (108b) in Übereinstimmung mit einem zweiten Protokoll und auf eine Weise, die mit der ausgerichteten Betriebsweise der zweiten Netzwerkvorrichtung (104b) zum synchronen Betrieb der ersten und zweiten Untergruppe des ersten Netzwerkes (104a) komplementär ist, worin die komplementäre Steuerungsweise die Ausrichtung des Sende- und Empfangsbetriebs des ersten und zweiten Drahtlos-Sende-Empfangsgeräts (102a, 102b) mit einem Referenzsignal umfasst, in Bezug auf welches die erste und zweite Untergruppe der ersten Netzwerkvorrichtung (104a) ihren Betrieb synchronisieren, wobei die Ausrichtung mit dem Referenzsignal inkrementell auf eine Weise bewirkt wird, die von dem Ausmaß der Fehlausrichtung mit einem Übertragungs-Zeitschlitz abhängt.

10. Verfahren nach Anspruch 9, worin die inkrementelle Ausrichtung die Dekrementierung einer Übertragungs-Zeitschlitz-Beginnzeit um ein vorbestimmtes Ausmaß für m nacheinander erfolgende Übertragungs-Zeitschlitze umfasst, wenn das Ausmaß der Fehlausrichtung weniger als die Hälfte der Übertragungs-Zeitschlitzgröße beträgt.

11. Verfahren nach Anspruch 9, worin die inkrementelle Ausrichtung die Inkrementierung einer Übertragungs-Zeitschlitz-Beginnzeit um ein vorbestimmtes Ausmaß für n nacheinander erfolgende Übertragungs-Zeitschlitze umfasst, wenn das Ausmaß der Fehlausrichtung mehr als die Hälfte der Übertragungs-Zeitschlitzgröße beträgt.

## Revendications

1. Groupement d'appareils réseautés comprenant:
une première pluralité d'appareils (104a) incluant des premier et deuxième sous-ensembles réseautés sans fil ensemble, chaque appareil (104a) étant équipé pour communiquer sans fil en accord avec un premier protocole de saut de fréquence, les premier et deuxième sous-ensemble fonctionnant en accord avec un premier et un deuxième motif de saut de fréquence basé sur un premier et un deuxième motif pseudo aléatoire;
une deuxième pluralité d'appareils (104b) réseautés sans fil ensemble, chaque appareil (104b) étant équipé pour communiquer sans fil en accord avec un deuxième protocole; et
un appareil multi-protocole (100) équipé d'un premier et d'un deuxième émetteur-récepteur (102a, 102b) pour communiquer sans fil avec les première et deuxième pluralité d'appareils (104a, 104b) en accord avec les premier et deuxième protocoles respectivement, où les premier et deuxième sous-ensembles (104a) de la première pluralité d'appareils sont fonctionnellement synchronisés à un signal de référence, et la deuxième pluralité d'appareils (104b) sont fonctionnellement alignés au même signal de référence, et l'appareil multi-protocole (100) comprend une logique de commande pour fonctionner d'une manière qui est complémentaire à la synchronisation ainsi que l'alignement par rapport au signal de référence, et où la logique de commande comprend une logique pour effectuer l'alignement avec le signal de référence par incréments d'une manière dépendante d'une quantité de désalignement avec une intervalle de temps de transmission, pour réduire l'interférence entre les premiers et deuxièmes appareils (104a, 104b).

2. Groupement d'appareils selon la revendication 1, où la logique décrémente un temps de départ d'intervalle de temps de transmission selon une quantité prédéterminée pour m intervalles de temps de transmission successifs si la quantité de désalignement est inférieure à la moitié d'une grandeur d'intervalle de temps de transmission.

3. Groupement d'appareils selon la revendication 1, où la logique incrémente un temps de départ d'intervalle de temps de transmission selon une quantité prédéterminée pour n intervalles de temps de transmission successifs si la quantité de désalignement est supérieure à la moitié d'une grandeur d'intervalle de temps de transmission.

4. Appareil (100) comprenant:
une pluralité d'émetteurs-récepteurs sans fil (102a, 102b) pour transmettre et recevoir des signaux en accord avec un premier et un deuxième protocole, à et de premier et deuxième dispositifs de réseau (104a, 104b) d'un premier et deuxième réseau sans fil (108a, 108b) couplés en communication à l'appareil (100), les premiers dispositifs de réseau (104a) comprenant des premier et deuxième sous-ensembles qui transmettent et reçoivent en accord avec un premier et un deuxième motif de saut de fréquence basé sur un premier et un deuxième motif pseudo aléatoire d'une manière synchronisée, le premier protocole étant un protocole de saut de fréquence; et
au moins un gestionnaire de commande (106a, 106b) couplé aux émetteurs-récepteurs sans fil (102a, 102b) pour commander et coordonner le fonctionnement des émetteurs-récepteurs sans fil (102a, 102b) d'une manière qui complète le fonctionnement synchronisé des premier et deuxième sous-ensembles des premiers dispositifs de réseau (104a) pour réduire l'interférence entre l'appareil (100) et les premier et deuxième dispositifs de réseau (104a, 104b), où au moins un gestionnaire de commande précité (106a, 106b) inclut une logique pour aligner les opérations de transmission et de réception desdits émetteurs-récepteurs sans fil (102a, 102b) avec un signal de référence contre lequel les premier et deuxième sous-ensembles des premiers dispositifs de réseau (104a) synchronisent les opérations, l'alignement au signal de référence étant effectué par incréments d'une manière dépendant de la quantité de désalignement avec une intervalle de temps de transmission.

5. Appareil selon la revendication 4, où la logique décrémente un temps de départ d'intervalle de temps de transmission selon une quantité prédéterminée pour m intervalles de temps de transmission successifs si la quantité de désalignement est inférieure à la moitié d'une grandeur d'intervalle de temps de transmission.

6. Appareil selon la revendication 4, où la logique incrémente un temps de départ d'intervalle de temps de transmission selon une quantité prédéterminée pour n intervalles de temps de transmission successifs si la quantité de désalignement est supérieure à la moitié d'une grandeur d'intervalle de temps de transmission.

7. Appareil selon la revendication 4, où le premier protocole est bluetooth, et le deuxième protocole est un protocole sélectionné dans un groupe constitué d'un fonctionnement en saut de fréquence de 802,11, d'une séquence directe 802,11, 802,11a, 802,11b et RF Maison.

8. Appareil selon la revendication 4, où l'appareil est un ordinateur ayant un facteur de forme sélectionné dans un groupe constitué d'un type de bureau, d'un type bloc-notes et d'un type d'ordinateur de poche.

9. Procédé de fonctionnement d'un appareil (100) ayant un premier et un deuxième émetteur-récepteur sans fil (102a, 102b), le procédé comprenant les étapes consistant à:
(a) commander au premier émetteur-récepteur sans fil (102a) de transmettre et de recevoir des données à et de premier et deuxième sous-ensembles de premiers dispositifs de réseau (104a) d'un premier réseau sans fil (108a) en accord avec un premier protocole qui est un protocole en saut de fréquence, et d'une manière qui est complémentaire à une manière de fonctionnement synchronisée des premier et deuxième sous-ensembles des premiers dispositifs de réseau (104a) en accord avec des premier et deuxième motifs de saut de fréquence basés sur des premier et deuxième motifs pseudo aléatoires respectivement; et
(b) commander au deuxième émetteur-récepteur sans fil (102b) de transmettre et de recevoir des données à et de deuxièmes dispositifs de réseau (104b) d'un deuxième réseau sans fil (108b) en accord avec un deuxième protocole, et d'une manière qui est complémentaire à une manière de fonctionnement alignée des deuxièmes dispositifs de réseau (104b) au fonctionnement synchronisé des premier et deuxième sous-ensembles des premiers dispositifs de réseaux (104a), où les manières de commande complémentaires comprennent l'alignement des opérations de transmission et de réception des premier et deuxième émetteurs-récepteurs sans fil (102a, 102b) avec un signal de référence contre lequel les premier et deuxième sous-ensembles des premiers dispositifs de réseau (104a) synchronisent les opérations, l'alignement au signal de référence étant effectué par incréments d'une manière dépendant de la quantité de désalignement avec une intervalle de temps de transmission.

10. Procédé selon la revendication 9, où l'alignement par incréments comprend la décrémentation d'un temps de départ d'intervalle de temps de transmission selon une quantité prédéterminée pour m intervalles de temps de transmission successifs si la quantité de désalignement est inférieure à la moitié d'une grandeur d'intervalle de temps de transmission.

11. Procédé selon la revendication 9, où l'alignement par incréments comprend l'incrémentation d'un temps de départ d'intervalle de temps de transmission selon une quantité prédéterminée pour n intervalles de temps de transmission successifs si la quantité de désalignement est supérieure à une moitié d'une grandeur d'intervalle de temps de transmission.
